# EUROPEAN PATENT APPLICATION

(11) **EP 1 358 988 A1**
(43) Date of publication of application: **05.11.2003**
(21) Application number: 03386010.7
(22) Date of filing: 21.04.2003
(51) Int. Cl.: B29C 41/04, B29C 41/20, B29C 41/22, B65D 1/48, B65D 90/02

(54) **Making parts by rotational moulding**

(30) Priority: 30.04.2002 GR 2002100207
(71) Applicant: Gesikat Ltd., Levadia, Viotia 32100 (GR)
(72) Inventor: Lambrou, Elias, 32100 Levadia Viotia (GR)

(57) **Abstract**

Making parts by using polymer matrix and metallic plexus or other metallic elements rotary moulding for the production of products with strengthened endurance.

This invention is referred to the combination of two different materials, specifically thermoplastic materials, which are used in rotational moulding method and metallic frames (2) or perforated metals or other metallic elements for the production of products with strengthened endurance.

Exploiting the advantages of composite materials and applying rotary moulding we achieve to place continuous metallic frame in polymer thermoplastic polyethylene (3). This metallic frame (2) can be metallic plexus any other form of metallic framework of perforated plate or it is even constructed by sheets.

## Description

The present invention is referred to the combination of two different materials, particularly thermoplastic materials, which are used in rotational moulding and metallic plexus or perforated metallic plates or other metallic elements for the production of products with strengthened endurance.

Until now we have the combination of polymer material with other elements which are encaged in the polymer for example fibers of carbon, which results in a product of composite material.

Some of the basic characteristics which are acquired by the composite materials are the following :
1. The fibers carry the load , while the polymer matrix acts as a mean of transportation and protects the fibers from environmental effections like high temperatures and humidity.
2. They present a combination of high strength and flexural modulus.
3. The ratios of strength / weight as well as flexural modulus are considerable higher than other materials which have the same use.
4. Composite materials have smaller modulus of thermal conduction and as a result they have bigger dimensions stability In higher temperature scale.
5. Composite materials have high internal fade which has as a result the limited sound transmission as well as the limited vibration to the adjoing parts of the construction.

Exploiting, the above properties the present level of the technical applications exhibits products that use as multipartite thermoset plastics like epoxy resins or polyester resins and as a mean of reinforcement fibers of carbon, glass, kevlav 49.

Some of the methods we use to produce complex material with thermoset plastics are the following :
a. Injection moulding method
b. Compression moulding method
c. Pulerusion method
d. Tilament winding method

Using the above methods products of composite materials are produced like silos canopies of lorries, ceilings of cars, doors, tanks, chairs, tables, boats, floats, electronic boards, air ducts, solar panels and other products .

Until now it hasn't been achieved the production of products with composite material which use as matrix thermoplastic material made of polypropylenium or polyethylenium. On the contrary some products having local strengthening have been produced by using the method of injection moulding or the rotational moulding method.

The main reason for not producing products with composite material which use as matrix thermoplastic material is the difficulty to input fibers into the thermoplastic, due to high viscosity during melting.

Taking advantage of all the above properties of the composite materials and applying the rotational moulding we succeed in putting continuous metal frame in thermoplastic matrix polyethylenium or polypropylenlum.

The metallic framework can be metallic plexus or whichever form of metallic frame from perforated plate or even constructed by metal sheets.

These and other characteristics as well as the advantages of this invention will be obvious in the following detailed description. This invention will be more understandable with reference to the drawing which accompanies it and depicts materialization of it.

In the first drawing we have cross-section of a cylinder vessel where the metallic frame haw been made plastic by using polymer.

In the second drawing we have longitudinal section of a square vessel. The metallic frame has been made plastic by using polymer too.

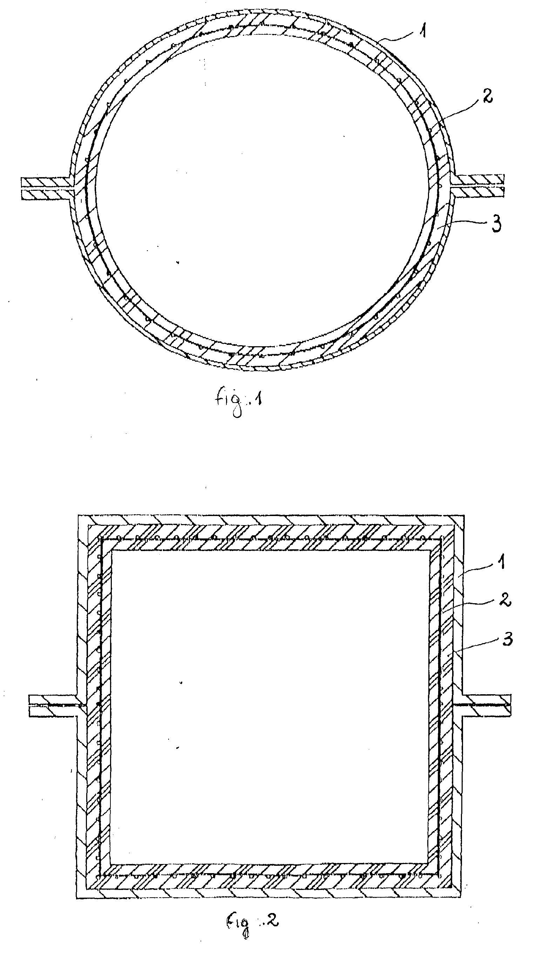

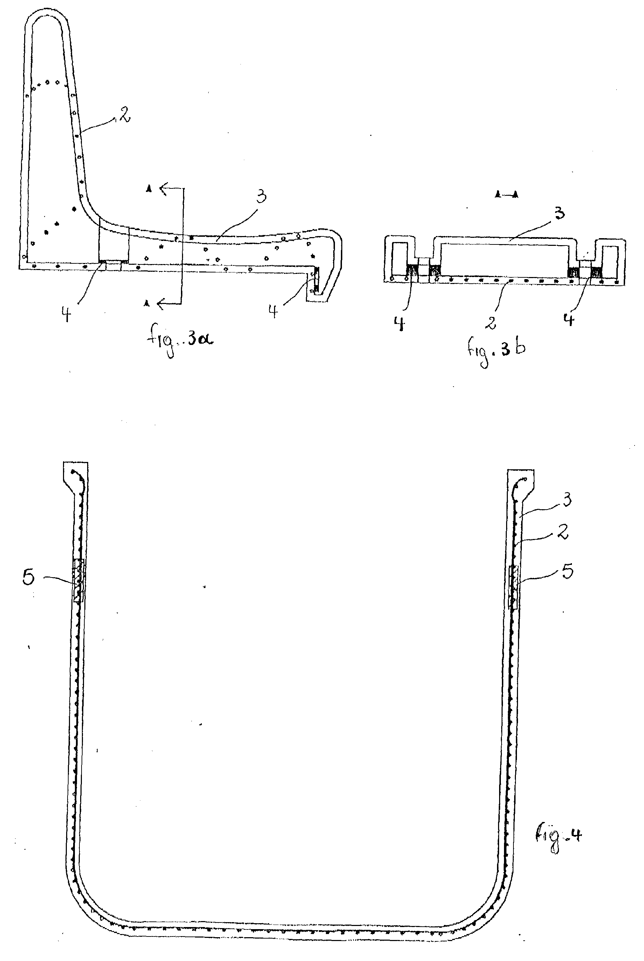

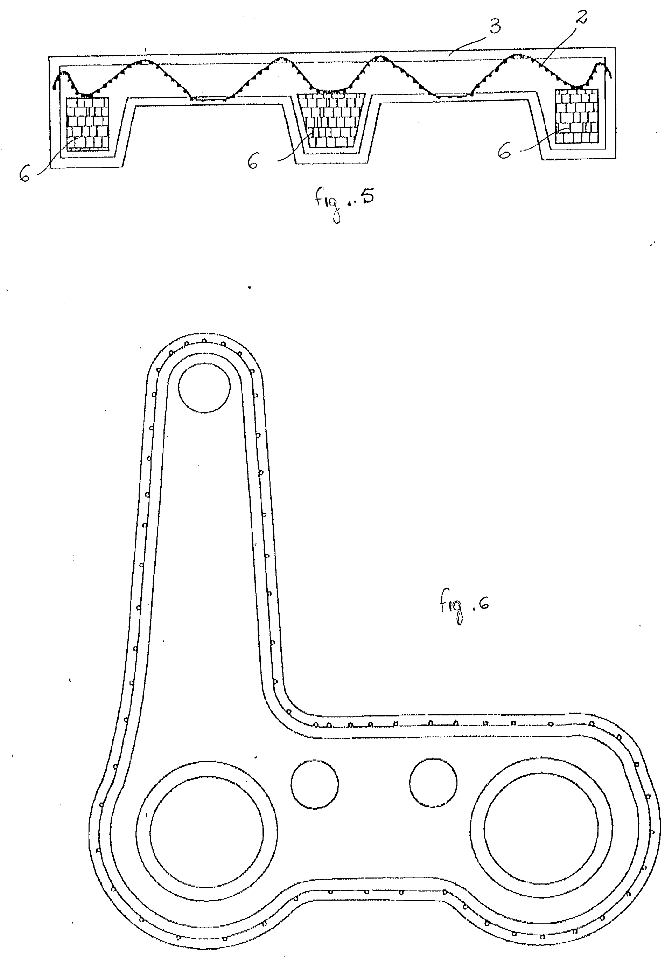

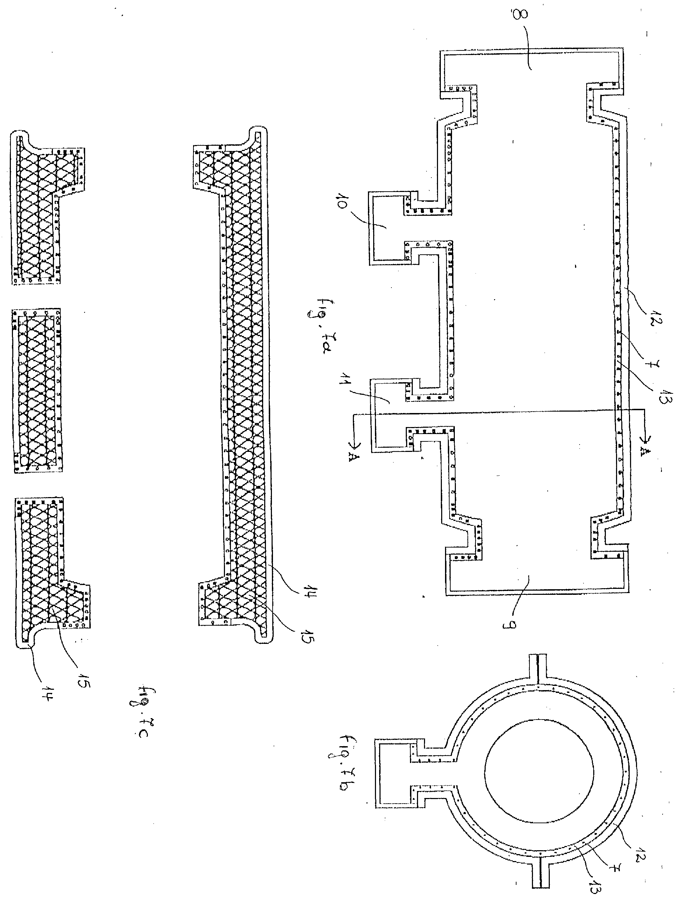

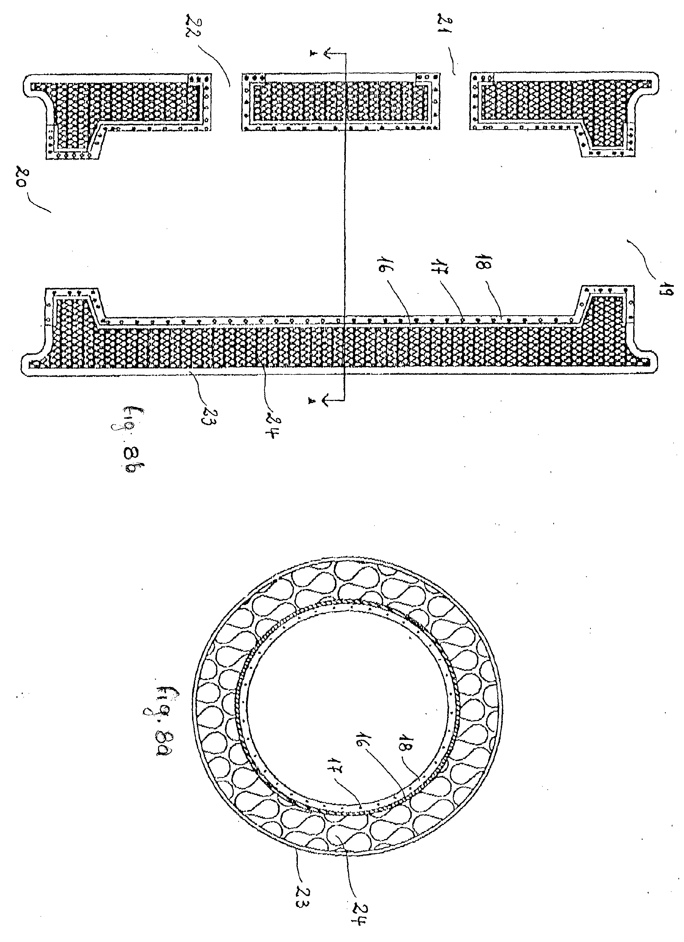

In the drawing 3a and 3b sections of athletic installations seats are being presented.

In the fifth drawing we can see a transpotation pallete In section.

In the sixth drawing section of plastic fishcage bracket is being presented.

In the seventh [a] drawing we have longitudinal section of a thermovessel with polymer and metallic frame work.

In the seventh [b] drawing we have cross-section A-A from the thermovessel which mentioned above.

In the seventh [c] drawing we have longitudinal section of the final product. in the eighth [a] drawing we have cross-section of A-A boiler.

In the eighth [b] drawing we have longitudinal section of a boiler as it is presented in its final form.

Referring now to the drawings that accompany it we are going to describe an indicative suggested application of this invention.

In the mold where the product is produced, which can be of steel or aluminum [ drawing 1 ] the metallic frame is placed inside It by using rotational moulding in such distance from the walls of the mold always analogous to the desirable thickness or the matrix which we want to give to the product. This also depends on the cross-section of the metallic frame or on the desirable position of the metallic frame in the body of the polymer.

According to another desirable application of this invention there is the possibility to place metallic elements in such positions where the products underg particular stresses .The metallic elements can be welded to the metallic frame so that the forces that act upon it to be applied to the whole vessel. In this way we avoid the local stresses which usually causes the problem.

We can mention the following examples:
a] Stadium seats in drawings 3a and 3b where there is a problem to the supporting points which is solved by placing metallic elements [H] to the fastening positions.
b] The rubbish bins which are shown in fourth drawing , here the problem is tracked to the suspension system. The solution Is also accomplished by using metallic plates with preprepared holes to use them in the points of the suspension.
c] The transportation pallets which are shown in the fifth drawing, here there is a problem to the contact points with ground. This problem is also solved by placing metallic elements [C].

We can have applications of this invention to the following cases:
- To Stadium seats which are shown in the drawing 3a and 3b.
- To Rubbish bins in drawing 4.
- To Transportation pallets in fifth drawing applied to dear cement.
- To Storage wardrobes for both internal and external use.
- To Brackets of plastic fishcages.
- To Buoys for anchoring systems.
- To Floats for floating jetties.
- To Electrical collector panels.
- To Vessels where we store or heat liquids under pressure, for example thermovessels, solar or electrical heaters, boilers, etc.

Two examples of applying this invention to thermovessels and heaters are mentioned below :

### FIRST EXAMPLE

Firstly we construct a metallic frame [7], plexus, or perforated plates giving it the form of the thermobooth, shown in drawing [a]. In this there are spans where we can place the electrical resistance [8], the pipes of a dose circuit of warm water [9] as well as the entrance [10] - exit [11] of usage water. The construction is put in a suitably formed mold [12] for the production with rotary moulding procedure of a multipartite vessel. The thermoplastic can be either polyethylene, polypropylene, or other suitable polymer.

The thermoplastic material we place in the mold Is In such amount that during the moulding the metallic frame to be completely covered and in the vessel only the thermoplastic material to be existed as it is shown in drawing 7b.

Secondly the vessel is placed in a bigger mold, as big as the demands of the thickness of the insulation we want to achieve and with which we form the external cover from thermoplastic material usually polyethylenium without this being confined. Between the thermobooth and external cover we put, by using the method of moulding, polyurethane. This material helps to achieve high densities about 40kg/m3 with very good thermal insulation results due to the restricted room and the fact that in this way we don't allow free distension.

With this thermovessel, which is shown in the drawing 7[c], we mainly confront the problem of erosion both internal and external while at the same time a product of good cost is produced.

The anti-erosive protection methods which are used until now are the following:
- Through galvanizing or electrolytic platting.
- Through covering with enamel.
- Through covering with set resins or thermoplastic materials or other polymers in liquid state [solidification either by auto-stiffening or baking in ovens]with the proteckive materials to be adhesive to the walls of the vessels.
- Through metallic covering with copper or steel.
- By using material that endure erosion like steel and copper.
- By preconstructing booths from multipartite which after they have been interposed by waterproof insulation and special liquid, they are placed in a metallic vessel as it is described in the applications 940100442 on 29^{th} of September in 1994 and 940100520 on 25^{th} of November in 1994 for getting a patent

### SECOND EXAMPLE

Here we have a copper vessel constructed which has the usual form like all the thermovessels-heaters either electrical or solar. We put metallic plexus into the vessel or perforated plate or other metallic frame [17] in all Its size as it is shown in the drawing 8[a] even in the exits where we put the resistance [19], the steamers and in the gaps which are used for the entrance and the exit of water as it is shown in the drawing 8[b].

The metallic frame is welded regularly In the copper vessel in such way that a gap 1-2 mm is formed between the copper vessel and the metallic frame.

Later the thermoplastic material is put through the gaps which are there. Special segments are put in the gaps in such way that the thermovessel mold is closed so that we can achieve in making it plastic everywhere even in edges. In this way the same vessel can be used as a mold in the rotational moulding.

Afterwards it is placed into the rotational moulding machine. In this way we achieve plasticity into the copper vessel metal frame in such thickness that only thermoplastic material like polyethylene , polypropylene or other suitable polymer to be inside it.

The metallic frame is made plastic in the body of the polymer and as it is welded to the copper vessel it doesn't allow polymer to contact during cooling.

Plasticity is achieved everywhere . In this way total contact between polymer and copper is achieved without creating gaps which can cause problems to the conveyance of pressure or other problems of erosion.

The advantages are that we achieve total protection from erosion, increase in the vessels strength and we manage to avert electrolytic phenomenon.

After that in the same way with the one described in the first example the vessel is surrounded by another booth of polymer, then we put between them the desirable thickness of insulation from polyurethane.

We must underline here that the description of this invention has been done with indicative examples which are not the only ones. So whatever change or alternation concerning shapes, sizes, usable constructive materials and assemblage if they aren't a new inventive step are considered to be included in the aims and aspirations of the present invention.

## Claims

1. Making parts by using thermoplastic material and metallic plexus or other metallic elements with rotary moulding for the production of products with strengthened endurance is **characterized by** the fact that when we develop the advantages of the composite material and put the rotational moulding into practice we achieve to place continuous-broken metallic frame in polymer thermoplastic polyethylenium, polypropylenium or other suitable thermoplastic partite where the metallic frame can be a metallic plexus or another form of metallic framework from perforated plate or even constructed by sheet laminates.

2. Making parts by using thermoplastic materials and metallic plexus or other metallic elements with rotational moulding for the production of products with strengthened endurance according to the above claim [1] is **characterized by** the fact that in the mold [1] where the product is produced with rotational moulding, the metallic frame [2] is put inside it and in such distance from the walls analogous to the desirable thickness of the polymer matrix [3] which we want to achieve. Furthermore if we take into consideration the cross-section of the metallic frame or the desirable position which we want the frame to have in the body of the polymer it Is possible to place metallic components or other elements in such points that the products which result from this procedure has the ability to accept special stresses due to their function.

3. Making parts by using thermoplastic material and metallic plexus or other metallic elements with rotational moulding for the production of products with strengthened endurance according to the above claim [1] is **characterized by** the fact that we can have its application to thermovessel in order to confront effectively the erosion problem both internal and external . According to this application we construct metallic frame [7], plexus or perforated plate in thermobooth form with all the know gaps of a heater. This construction is placed into a suitable formed mold [12] for the production, with rotational moulding, of polymer vessel, where the polymer is polyethylenium, polypropylenium or other suitable polymer. The amount of the polymer we use in this construction is as much as the metallic frame to be completely covered and only the polymer to be inside the mold. The vessel then is put in a bigger mold analogous to the demands of the insulation thickness we want to achieve and with which we form the external cover usually from polyethylenium without this to be considered the only alternative. After that we put the insulation between the thermobooth and the external cover [14].

4. Making parts by using polymer matrix material and metallic elements with rotational moulding for the production of products with strengthened endurance according to the above claim [1] is **characterized by** the fact that we can have its application to usual heaters achieving total protection from erosion increase in the endurance of the vessel and also it helps to prevent electrolytic phenomenon. We place metallic plexus or perforated plate or other metallic frame [17] inside the copper vessel of ordinary solar or electric heaters and in all their size. The metallic frame is regularly welded to the vessel so that a gap of 1-2 mm is created between the copper vessel and the metallic frame. Afterwards we put the multipartite by placing special segments in the gaps in such way that the mold-vessel is dosed and functions as a mold of rotational moulding. In this way we achieve to have plasticity everywhere even in edges. The metallic frame In this way is enclosed in the polymer matrix and because it is welded to the vessel it doesn't allow to the polymer to be contracted during cooling. Plasticity is accomplished everywhere and the contact between the polymer and the copper is total without gaps which can cause problems to the conveyance of the pressure. After that the vessel is surrounded by another booth from polymer [23]. We place then between them the desirable insulation thickness of polyurethane.
